# EUROPEAN PATENT SPECIFICATION

(11) **EP 2 737 255 B1**
(45) Date of publication and mention of the grant of the patent: **02.11.2016**
(21) Application number: 12759184.0
(22) Date of filing: 30.07.2012
(51) Int. Cl.: F24D 3/08, F24D 11/02, F24D 19/10

(54) **HYDRONIC SYSTEM**
HYDRONISCHES SYSTEM
SYSTÉME HYDRONIQUE

(30) Priority: 29.07.2011 IT MO20110193
(43) Date of publication of application: 04.06.2014
(73) Proprietor: Bellinello, Diego, 45030 San Martino di Venezze (IT); GREENIMPIANTI S.r.l, 38068 Rovereto (TN) (IT)
(72) Inventor: Bellinello, Diego, 45030 San Martino di Venezze (IT)
(74) Representative: Brunacci, Marco
(86) International application number: PCT/IB2012/001460
(87) International publication number: WO 2013/017932

(56) References cited:
- EP-A1- 0 117 796
- EP-A1- 1 906 109
- US-A- 4 242 872
- US-A- 4 248 049
- US-A- 4 438 881
- US-A- 5 628 200

## Description

### Technical Field

The present invention relates to a hydronic system.

### Background Art

It is known that hydronic systems are thermo-fluid dynamic systems, for home and industrial use, but not only, which exploit water as thermo-vector fluid to heat and/or cool the interiors of a building and, more often than not, to produce, at the same time, domestic hot water in washbasins, showers and baths.

Traditional systems are composed of a boiler heated by means of a burner using gas or diesel fuel as a first energy source.

In a perspective of energy saving and reduction of energy consumption, hydronic systems have been developed which exploit renewable energies by means of devices such as thermal solar panels and geothermal probes.

A particular type of hydronic system is shown in the Italian patent application RO2008A000005.

To a large extent, such patent concerns a thermal machine connected to two or more heat sources, in particular a thermal solar panel, a geothermal probe, an air absorber and a swimming pool, the thermal energy of which is transferred to a tank which acts as a hot water storage unit.

Like traditional boilers, the tank contains hot water used to heat the domestic interiors by means of traditional wall or floor radiators, and houses an inner coil wherein domestic hot water circulates.

Unlike traditional boilers however, this tank is without burner and contains a series of thermal-exchange coils connected to the thermal solar panel and to a refrigeration circuit, in turn connected to the various heat sources.

When the operating temperature of the thermal solar panel is above that of the tank, the heat can be transferred directly from the thermal solar panel to the tank without starting the refrigeration circuit.

When, instead, the temperature of the solar panel is below that required by the tank, the tank can nevertheless continue to be heated by means of the refrigeration circuit, which recovers the heat from one or more of the heat sources at disposal, increasing its energy level.

This system of known type is susceptible to further upgrading targeted, in particular, at increasing its efficiency and its operating flexibility.

In this respect, it must be underlined that, for the production of domestic hot water and interior heating by means of traditional wall radiators, the temperature of the water inside the tank must be fairly high, e.g., around 45 - 60 °C.

For the purpose of heating interiors by means of floor heating systems on the other hand, water is required at an operating temperature of about 35°C.

Traditional systems thus have a dissipator device which is placed in between the tank and the floor radiators and which is designed to disperse part of the heat of the water coming from the tank, bringing its temperature from 45-60°C to around 35°C, as required.

Such type of operation however, determines a considerable waste of thermal energy placed at disposal by the various heat sources, with a consequent increase in operating costs.

To this must also be added that traditional systems are particularly complex and complicated.

EP 1 906 109 shows an efficiency enhanced hydronic system.

### Description of the Invention

The main aim of the present invention is to provide a hydronic system which allows obtaining the above-mentioned upgrading and which is more efficient and flexible to use.

A further object of the present invention is to provide a hydronic system able to better exploit the thermal energy placed at disposal by the heat sources, avoiding pointless waste and consequently cutting operating costs.

Another object of the present invention is to provide a hydronic system that allows to overcome the mentioned drawbacks of the state of the art in the ambit of a simple, rational, easy and effective to use as well as low cost solution.

The above objects are achieved by the present hydronic system, characterized by the fact that it comprises:
- at least a first tank, which is suitable for containing water at a first operating temperature and is connected to a first system for heating and/or cooling interiors and/or for producing hot water for sanitary use;
- at least a second tank, which is suitable for containing water at a second operating temperature and is connected to a second system for heating and/or cooling interiors;
- at least a first refrigeration circuit suitable for transferring heat between said first tank and an evaporator element;
- at least a second refrigeration circuit suitable for transferring heat between said second tank and said evaporator element; and
- at least a service circuit suitable for transferring heat between said evaporator element and at least a heat source.

### Brief Description of the Invention

Other characteristics and advantages of the present invention will become more evident from the description of a preferred, but not sole, embodiment of a hydronic system, illustrated purely as an example but not limited to the annexed drawings in which:

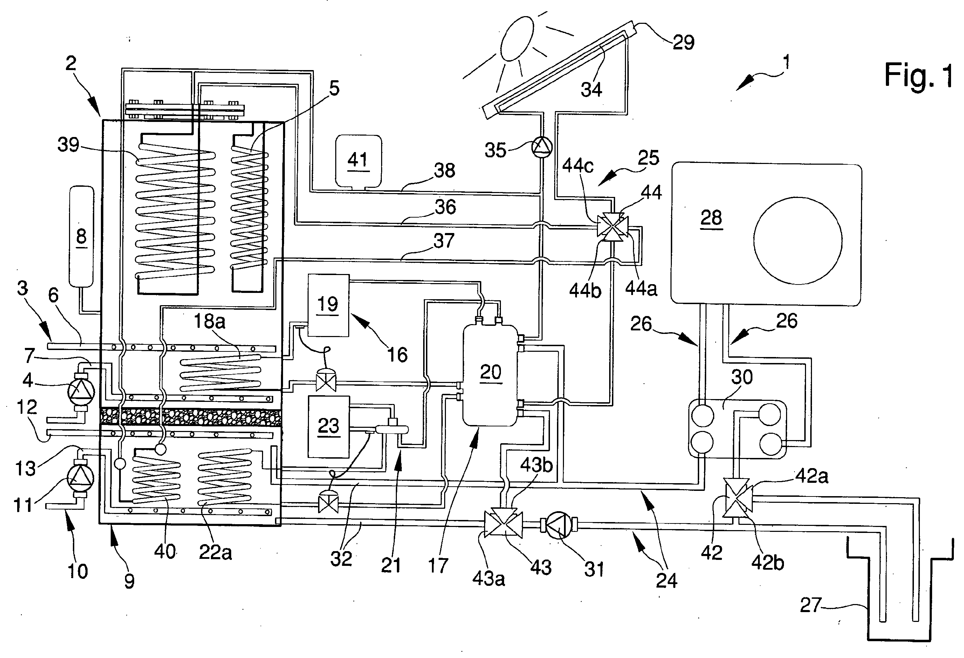

figure 1 is a layout view of the hydronic system according to the invention;

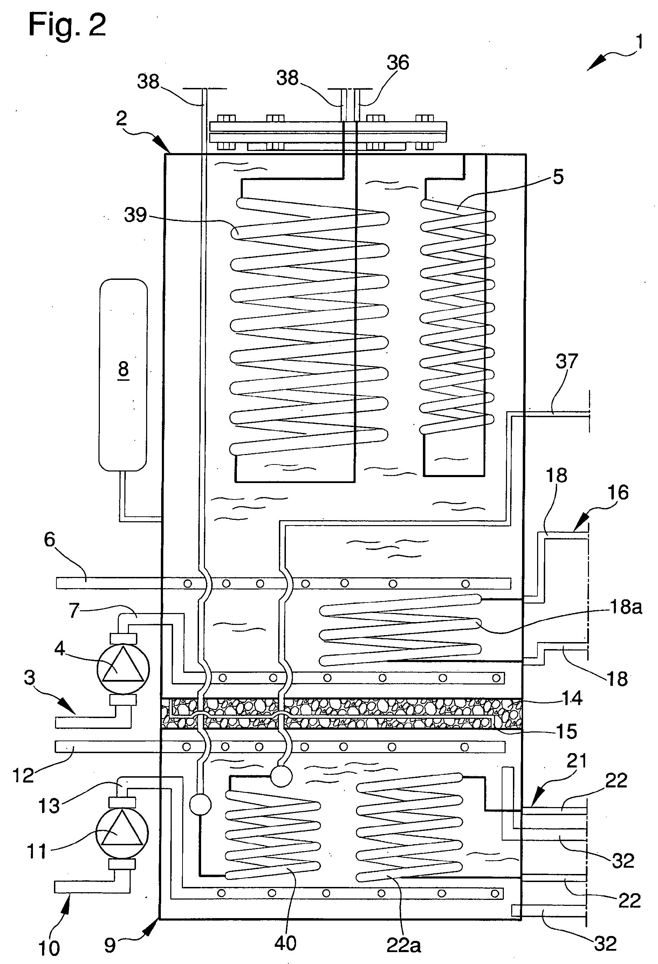

figure 2 is a layout view, on an enlarged scale, of a detail of the hydronic system according to the invention;

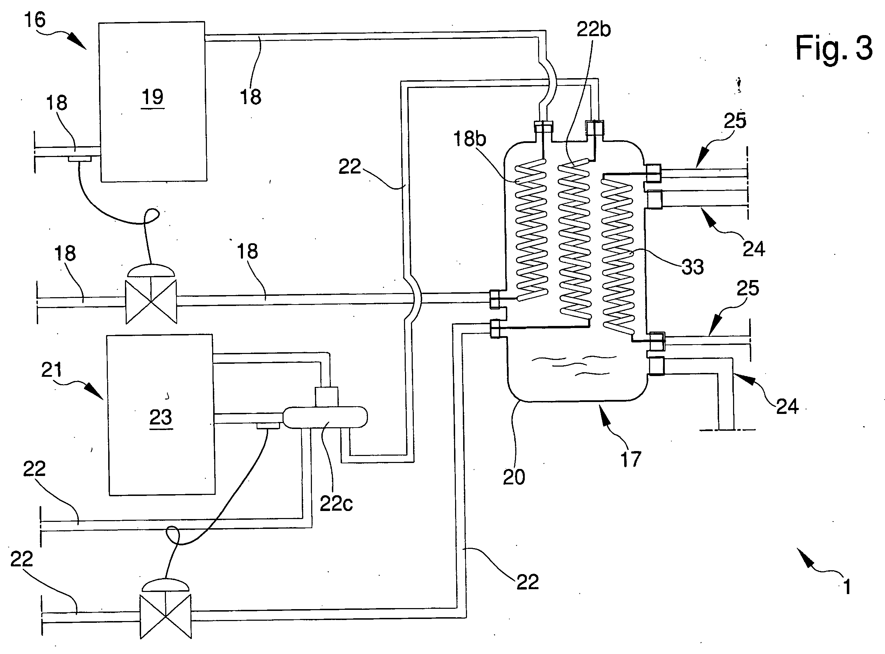

figure 3 is a layout view, on an enlarged scale, of another detail of the hydronic system according to the invention;
figures from 4 to 9 are a series of layout views which show the hydronic system according to the invention in different operating conditions.

### Embodiments of the Invention

With particular reference to such figures, globally indicated by 1 is a hydronic system.

The hydronic system 1 is designed to be used inside any building, for home, industrial or commercial use, to produce domestic hot water and to heat and/or cool the interiors of the building itself.

The hydronic system 1 comprises a first tank 2, which is suitable for containing water at a first operating temperature and is placed in fluidic connection with a first system 3 for heating and/or cooling the interiors.

The first system 3, in particular, is a heating system having traditional wall radiators operating at high temperature, not shown in the illustrations, and pressurized by a corresponding first pump 4.

Furthermore, the first tank 2 is designed to heat hot water for sanitary use; for this purpose, in the top of the first tank 2 a piping line 5 is dipped wherein circulates the domestic water which, taken from the water mains, is heated inside the first tank 2 and conveyed to the sanitary units of the building.

The first operating temperature of the water contained in the first tank 2 is therefore substantially high and, approximately, is between 45°C and 60°C.

For connection to the first system 3, the first tank 2 has a first delivery pipe 6 and a first return pipe 7, which are dipped at the base of the first tank 2.

Furthermore, the first tank 2 has a first expansion chamber 8 suitable for receiving any excess water occurring inside the first tank 2.

The hydronic system 1 also comprises a second tank 9, which is suitable for containing water at a second operating temperature and is connected to a second system 10 for heating and/or cooling the interiors of the building.

The second system 10 is different from the first system 3 inasmuch as it consists of a system with floor radiators and is able to operate both to heat and to cool interiors.

The second system 10 is pressurized by a corresponding second pump 11.

The second operating temperature of the water contained in the first tank 2 is therefore substantially lower than the first operating temperature of the first tank 2 and, approximately, is between 33°C and 40°C, in heating phase, and between 5°C and 20°C, in cooling phrase.

For connection to the second system 10, the second tank 9 has a second delivery pipe 12 and a second return pipe 13, which are dipped into the second tank 9.

The first tank 2 and the second tank 9 are thermally insulated the one from the other by interposition of a layer of insulating material 14.

The second tank 9, however, is placed in fluidic communication with the first tank 2 by means of a small connection pipe 15, which allows keeping the two tanks 2, 9 at the same pressure.

Normally, along the connection pipe 15 no water flow forms between the two tanks 2, 9 and the water of the first tank 2 does not mix with the water of the second tank 9, so as to maintain the different operating temperatures.

The usefulness of the connection pipe 15 lies in the fact that it allows avoiding the presence of another expansion chamber on the second tank 9, any excess water occurring inside the second tank 9 being able to flow into the first expansion chamber 8 through the connection pipe 15 and the first tank 2.

The hydronic system 1 also comprises a first refrigeration circuit 16 suitable for transferring heat between the first tank 2 and an evaporator element 17.

The first refrigeration circuit 16, in particular, is intended to heat the first tank 2 taking heat from the evaporator element 17.

The first refrigeration circuit 16 comprises:
- a first duct 18 closed on itself in a loop, which extends between the first tank 2 and the evaporator element 17 and contains a first refrigerating fluid, i.e., a thermo-vector fluid suitable for performing a refrigeration cycle, and
- a first compressor device 19 which is associated with the first duct 18 and is suitable for the compression of the first refrigerating fluid to perform the refrigeration cycle.

The first refrigerating fluid is specifically selected according to the first operating temperature at which the first tank 2 operates.

Preferably, the first refrigerating fluid is R 134 a.

The first duct 18 comprises a first coil portion 18a dipped into the first tank 2 and a first coil section 18b dipped into the evaporator element 17.

In particular, the evaporator element 17 comprises a water container 20 inside which is housed the first coil section 18b.

When the first refrigeration circuit 16 is in operation, the first refrigerating fluid yields heat to the water of the first tank 2 in correspondence to the first coil portion 18a, while it takes heat from the evaporator element 17 in correspondence to the first coil section 18b.

The hydronic system 1 also comprises a second refrigeration circuit 21 suitable for transferring heat between the second tank 9 and the evaporator element 17.

The second refrigeration circuit 21 comprises:
'- a second duct 22 closed on itself in a loop, which extends between the second tank 9 and the evaporator element 17 and contains a second refrigerating fluid, intended to perform a refrigeration cycle different to that of the first refrigeration circuit 16, and
- a second compressor device 23 which is associated with the first duct 18 and is suitable for the compression of the second refrigerating fluid.

Unlike the first refrigeration circuit 16, the second refrigeration circuit 21 is intended both to heat and to cool, according to requirements, the second tank 9, taking or dispersing heat through the evaporator element 17.

For this purpose, the second compressor device 23 fits on the second duct 22 in correspondence to an inverter valve device 22c, suitable for reversing the flow of the second refrigerating fluid depending on whether the second tank 9 is to be heated rather than cooled.

The second refrigerating fluid is selected according to the second operating temperature at which the second tank 9 operates.

Preferably, the second refrigerating fluid is R 410 c.

The second duct 22 comprises a second coil portion 22a dipped into the second tank 9 and a second coil section 22b, which is dipped together with the first coil section 18b into the evaporator element 17.

When the second refrigeration circuit 21 is in operation, the first refrigerating fluid yields heat, or takes heat, to/from the water of the second tank 9 in correspondence to the second coil portion 22a, while it takes heat, or yields heat, from/to the evaporator element 17 in correspondence to the second coil section 22b.

The hydronic system 1 also comprises a service circuit 24, 25, 26 suitable for transferring heat between the evaporator element 17 and at least one heat source 27, 28, 29.

In this respect, it is underlined that in this treatise, by the expression "heat source" is meant any device suitable for collecting, storing and/or dispersing heat.

In the particular embodiment shown in the illustrations, the hydronic system 1 comprises a plurality of heat sources 27, 28, 29 and, in particular, a geothermal probe 27, an air absorber 28 and a thermal solar panel 29.

Alternative embodiments are however possible wherein all the above heat sources 27, 28, 29 are not present, as in the following cases:
- hydronic system 1 with geothermal probe 27 only;
- hydronic system 1 with air absorber 28 only;
- hydronic system 1 with geothermal probe 27 and air absorber 28;
- hydronic system 1 with geothermal probe 27 and thermal solar panel 29;
- hydronic system 1 with air absorber 28 and thermal solar panel 29.

It is further pointed out that other embodiments cannot be ruled out wherein other heat sources are used different from the previous ones such as, e.g., a heated swimming pool for swimming or the like.

Usefully, the service circuit 24, 25, 26 comprises:
- a first pipe 24 for the thermal connection of the evaporator element 17 to the geothermal probe 27;
- a second pipe 25 for the thermal connection of the evaporator element 17 to the thermal solar panel 29; and
- a third pipe 26 for the thermal connection of the air absorber 28 to the first pipe 24, between the first pipe 24 and the second pipe 25 being positioned an air/water heat exchanger 30, e.g., of the plate type.

The container 20 is arranged in fluidic connection with a portion of the service circuit 24, 25, 26 and, in particular, with the first pipe 24.

In other words, the water contained in the container 20 can be made to circulate through the first pipe 24 right inside the geothermal probe 27.

The circulation of water inside the first pipe 24 is controlled by a first pumping device 31.

The first pipe 24, furthermore, comprises a first off-take 32 suitable for connecting directly the geothermal probe 27 to the second tank 9 without necessarily transmitting heat through the second refrigeration circuit 21.

The connection between the first off-take 32 and the second tank 9 is a direct connection of fluidic type, with mixing of the water contained in the second tank 9 and of the water circulating in the first pipe 24.

In other words, the second tank 9, the floor radiators of the second system 10, the evaporator element 17 and the geothermal probe 27 are arranged in reciprocal fluidic connection and, if need be, the same water can be made to circulate between them.

Unlike the first pipe 24, the second pipe 25 is closed on itself in a loop and there is no mixing with the water contained in the evaporator element 17.

The second pipe 25, in fact, comprises a coil element 33 dipped into the evaporator element 17 and a heat absorption section 34 fitted in the thermal solar panel 29.

The second pipe 25 contains water to which has been added antifreeze glycol, the circulation of which inside the second pipe 25 is controlled by a second pumping device 35.

In practice, the heat absorbed by solar irradiation in correspondence to the heat absorption section 34 is transferred to the evaporator element 17 through the coil element 33 and from here it is yielded to the first tank 2 (if the first refrigeration circuit 16 is operating), and/or to the second tank 9 (if the second refrigeration circuit 21 is operating), and/or conveyed along the first pipe 24 and dissipated through the geothermal probe 27 and/or the air absorber 28.

The second pipe 25, furthermore, comprises a second off-take 36, 37, 38 suitable for connecting directly the thermal solar panel 29 to at least one between the first tank 2 and the second tank 9, preferably both, without necessarily transmitting heat through the first refrigeration circuit 16 or the second refrigeration circuit 21.

The second off-take 36, 37, 38, in particular, is split into three conduit segments, of which a first conduit segment 36 leads to a first coil winding 39 dipped into the first tank 2, a second conduit segment 37 leads to a second coil winding 40 dipped into the second tank 9, and a third conduit segment 38 collects the water exiting from the coil windings 39, 40 re-conveying it to the heat absorption section 34 inside the thermal solar panel 29.

Along the second pipe 25 and/or the second off-take 36, 37, 38 a second expansion chamber 41 is fitted suitable for receiving any surpluses stemming from any possible evaporation/liquefaction of the water inside the thermal solar panel 29.

To manage the heat sources 27, 28, 29 an electronic processing and control unit is provided, not shown in the illustrations, intended to control the refrigeration circuits 16, 21, the pumping devices 31, 35, and the opening/closing of a series of valves 42, 43, 44 arranged along the hydronic system 1.

The valves 42, 43, 44, in particular, comprise a first three-way valve 42 and a second three-way valve 43 arranged along the first pipe 24, and a four-way valve 44 positioned along the second pipe 25.

The electronic processing and control unit, furthermore, is suitable for selecting the most convenient heat source 27, 28, 29 for transferring heat through the first refrigeration circuit 16. and/or the second refrigeration circuit 21.

In this respect, it must be pointed out that the hydronic system 1 is disseminated with temperature sensors suitable for communicating to the electronic processing and control unit the temperature of the water in the various parts of the hydronic system 1, such as the temperature inside the first tank 2, the second tank 9, the evaporator element 17, the geothermal probe 27, the thermal solar panel 29 and the air/water heat exchanger 30.

The operation of the present invention differs according to the season and can be split into winter operation and summer operation.

During winter operation, both the tanks 2, 9 require periodically heating to keep their temperature within the operating temperature provided for this season.

The first tank 2 must be kept hot (45-60°C) to satisfy the demand for heat from the piping line 5, for heating the domestic water, or from the first system 3, i.e., to heat the interiors by means of traditional wall radiators.

The second tank 9, instead, must be kept hot but at a lower temperature compared to the first tank 2 (33-38°C) to satisfy the demand for heat from the second system 10, i.e., to heat the interiors by means of the floor radiators.

In such circumstances, the preferential heat source 27, 28, 29 to supply the heat needed for the tanks 2, 9 is the thermal solar panel 29, in the sense that, if the latter is hot enough (temperature above the first operating temperature: T > 45-60°C), it can be used to yield heat to the first tank 2 and/or to the second tank 9 by means of the coil windings 39, 40 and without the operation of the refrigeration circuits 16, 21.

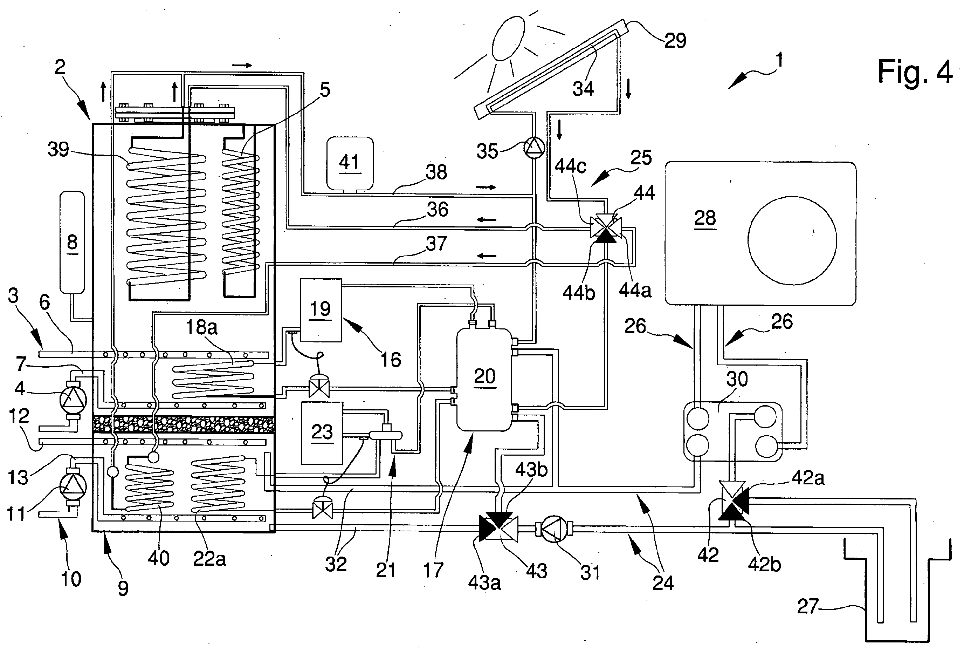

For this purpose, the electronic processing and control unit triggers the second pumping device 35 and sets the four-way valve 44, closing the passage 44b and opening the passage 44a and/or 44c (figure 4).

In the event of the thermal solar panel 29 being hot, but not hot enough (temperature above the second operating temperature but lower than the first operating temperature: 33-38°C < T < 45-60°C), then the second tank 9 can continue to be heated through the second coil winding 40, while for the first tank 2 operation of the first refrigeration circuit 16 is required.

In such circumstance, the electronic processing and control unit selects from among the heat sources 27, 28, 29 the one with the highest temperature to convey into the evaporator element 17 the highest possible quantity of heat through the service circuit 24, 25, 26.

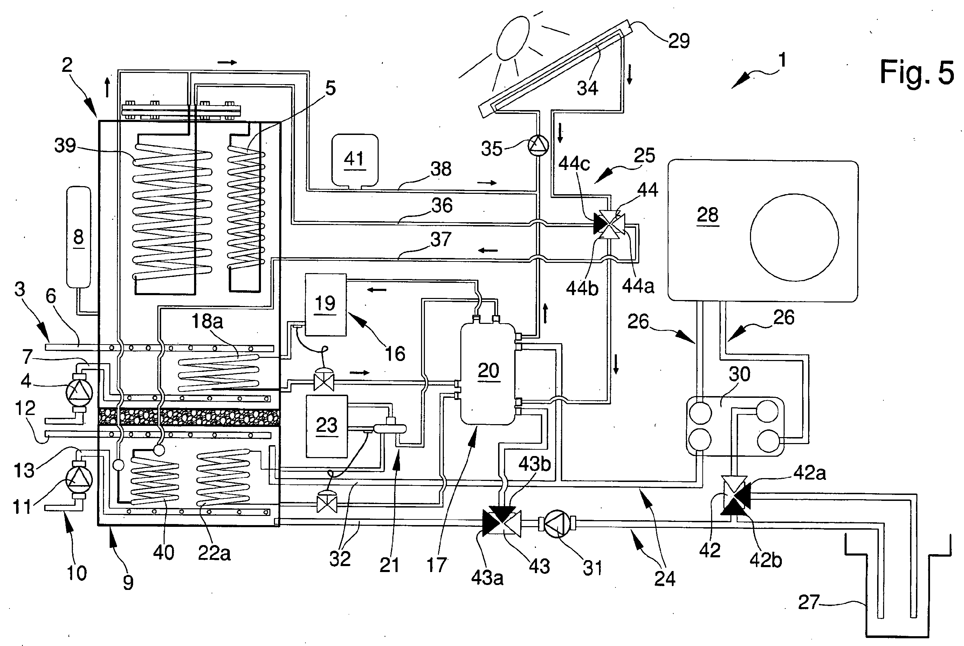

Supposing, by way of example, that the temperature of the thermal solar panel 29 is the highest one, then the electronic processing and control unit triggers the first compressor device 19, triggers the second pumping device 35 and sets the four-way valve 44, closing the passage 44c and opening the passage 44a and 44b (figure 5).

In the event instead of the thermal solar panel 29 being cold (temperature below the second operating temperature: T < 33-38°C), then both the tanks 2, 9 can continue to be heated by operating the refrigeration circuits 16, 21.

In this circumstance as well, the electronic processing and control unit selects from among the heat sources 27, 28, 29 the one with the highest temperature to convey into the evaporator element 17 the highest possible quantity of heat through the service circuit 24, 25, 26.

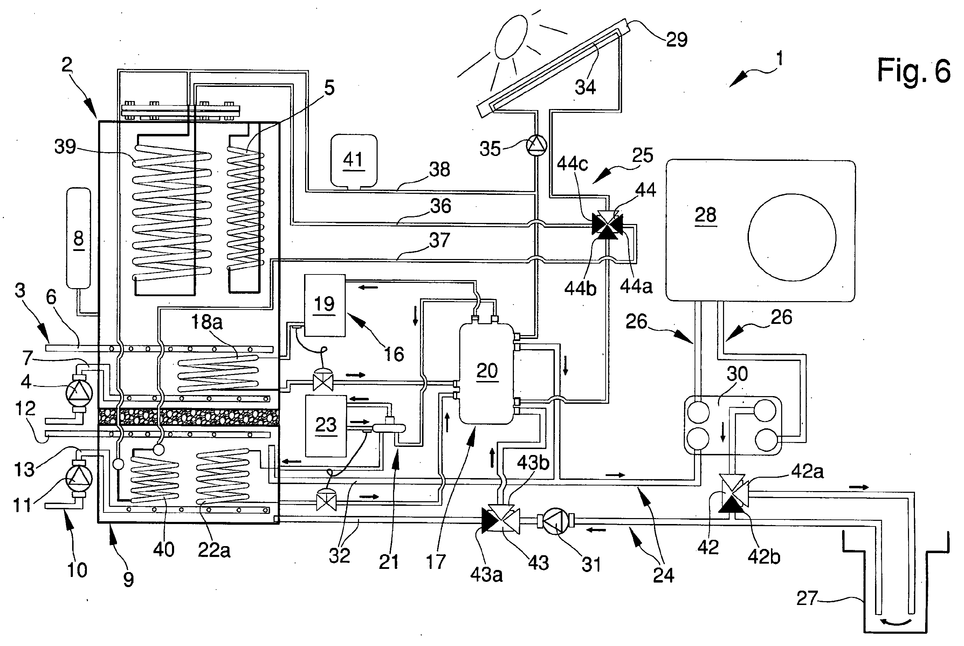

Supposing, by way of example, that the highest temperature at disposal is that of the geothermal probe 27, then the electronic processing and control unit triggers the compressor devices 19, 23, triggers the first pumping device 31 and sets the three-way valves 42, 43 closing the passages 42b and 43a and opening the passages 42a and 43b (figure 6).

Obviously, in the event of the demand for heat coming from only one of the tanks 2, 9, then the operating procedures described above continue to be valid, with the difference that the relative coil windings 39, 40 and/or refrigeration circuits 16, 21 are kept inoperative.

During summer operation, the first tank 2 needs to be heated while the second tank 9 has to be cooled to keep their temperatures within the operating temperature contemplated for this season.

The first tank 2 must be kept hot (45-60°C) to satisfy the demand for heat from the piping line 5 exactly as occurs in winter.

The second tank 9, instead, must be kept cold (5-20°C) to cool the interiors by means of the floor radiators of the second system 10.

In such circumstances, the possible operating conditions are many.

In the event of the thermal solar panel 29 being hot enough (temperature above the first operating temperature: T > 45-60°C) and of the geothermal probe 27 being cool enough (temperature below the second operating temperature: T < 5-20°C), then the first tank 2 can be heated by means of the first coil winding 39 while the second tank 9 can be cooled by means of the opening of the first off-take 32, without any operation of the refrigeration circuits 16, 21.

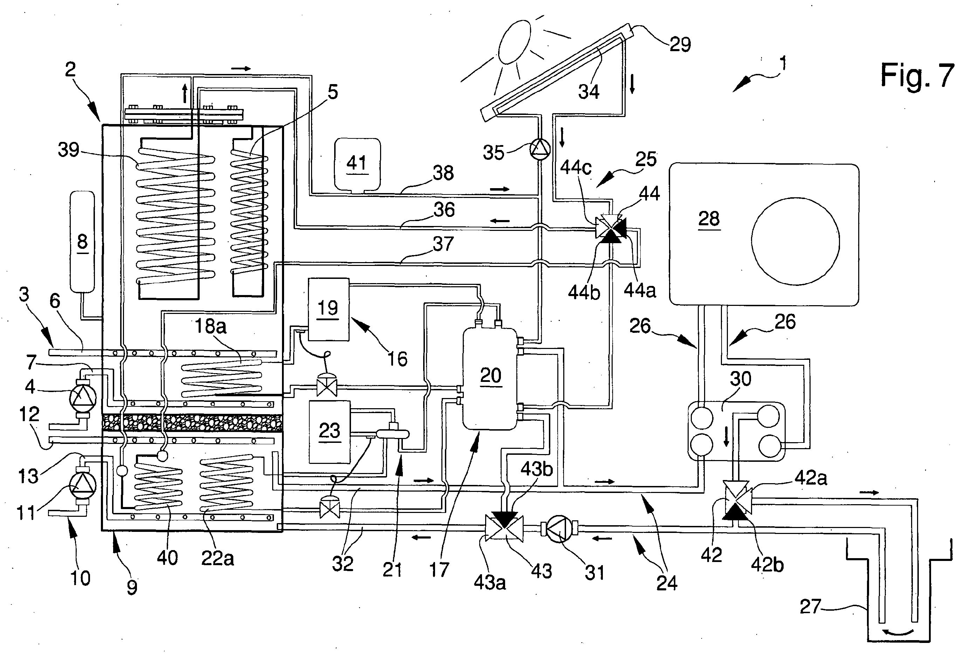

For this purpose, the electronic processing and control unit triggers both the pumping devices 31, 35, sets the three-way valves 42, 43 closing the passages 42b and 43b and opening the passages 42a and 43a, and sets the four-way valve 44 closing the passages 44a and 44b and opening the passage 44c (figure 7).

Furthermore, in the event of the heat collected by the thermal solar panel 29 being at least in part in excess with respect to the demand of the first tank 2, then the hydronic system 1 according to the invention can be conveniently used to dissipate such heat surplus inside the geothermal probe 27.

In other words, the thermal solar panel 29 has enough thermal energy to heat the first tank 2 and to yield it to the geothermal probe 27, which in turn is cool enough to disperse both the heat coming from the second tank 9 and that from the thermal solar panel 29.

This permits obtaining two technical advantages: the first is avoiding the overheating of the thermal solar panel 29 and preventing its being damaged in any way, and the second is reintegrating in the ground the heat which the geothermal probe 27 has absorbed above all in the winter period, avoiding any overcooling of the ground.

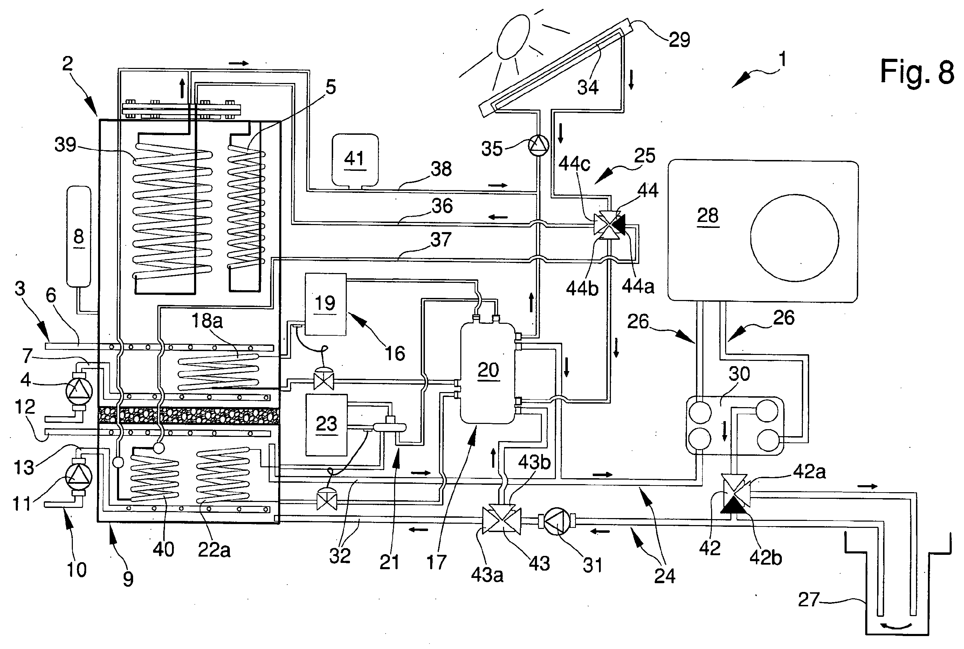

For this purpose, the electronic processing and control unit triggers both the pumping devices 31, 35, sets the three-way valves 42, 43 closing the passage 42b and opening the passages 42a, 43a and 43b and sets the four-way valve 44 closing the passage 44a and opening the passages 44b and 44c (figure 8).

In the event, instead, of the thermal solar panel 29 not being hot enough and of the geothermal probe 27 not being cool enough, then the operation of the refrigeration circuits 16, 21 becomes necessary.

For this purpose, the electronic processing and control unit proceeds in a very convenient way to trigger both the compressor devices 19, 23, without exchanging heat with any of the heat sources 27, 28, 29 at disposal.

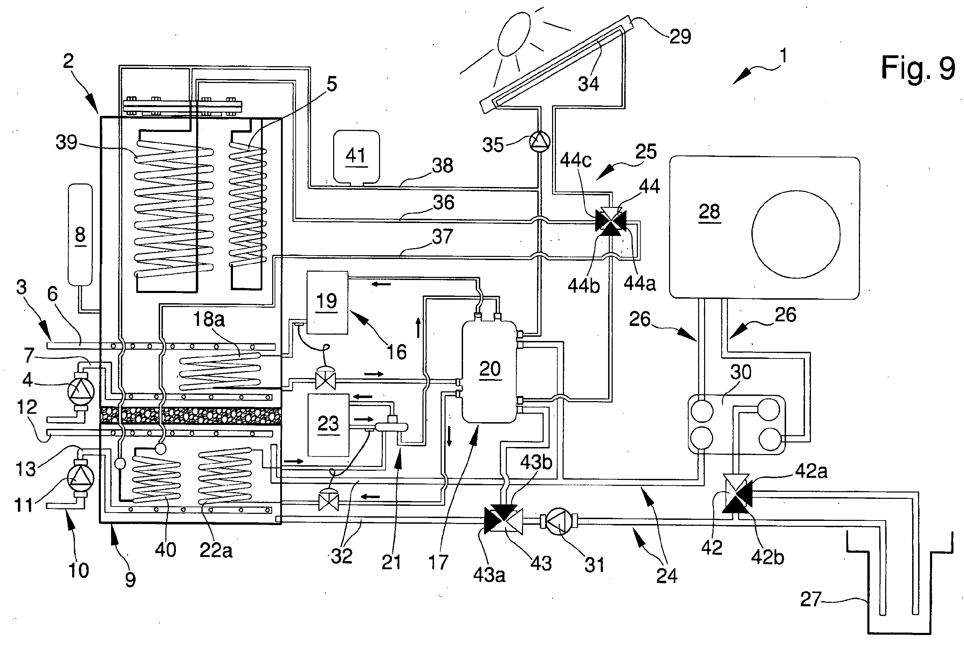

In other words, the second refrigeration circuit 21 takes heat from the second tank 9 and transfers it to the evaporator element 17 while the first refrigeration circuit 16 takes heat from the evaporator element 17 and transfers it to the first tank 2, obtaining, at the same time, the heating of the first tank 2 and the cooling of the second tank 9 (figure 9).

Obviously, in the event of the demand for calories or frigories coming only from one of the tanks 2, 9, then it is still possible to continue heating the first tank 2 by means of the first refrigeration circuit 16 or the first coil winding 39, or to cool the second tank 9 by means of the second refrigeration circuit 21 or by opening the first off-take 32.

In the event of the operation being required of one of the refrigeration circuits 16, 21, then the electronic processing and control unit connects to the evaporator element 17 the most convenient heat source 27, 28, 29 depending on the case, i.e., the one with the highest temperature in the case of the first refrigeration circuit 16 and the one with the lowest temperature in the case of the second refrigeration circuit 21.

In the use configurations shown in the illustrations, the operation has never been shown of the air absorber 28 but it is fairly intuitive to understand that, if it is more convenient to take or yield heat with the outside air rather than with the geothermal probe 27 or with the thermal solar panel 29, then all the electronic processing and control unit has to do is trigger the circuit of the air absorber 28 to connect it to the heat exchanger 30.

In correspondence to the heat exchanger 30 the first pipe 24 therefore starts to exchange heat, increasing or lowering its energy level according to the quantity of heat which the air absorber 28 is able to absorb or dissipate in the environment.

It has in fact been ascertained how the described invention achieves the proposed objects.

The particular solution of providing two distinct refrigeration circuits which are at the service of two corresponding tanks and are connected to the same evaporator element permits obtaining a hydronic system with improved efficiency and greater operating flexibility compared to traditional systems.

In particular it is underlined that the hydronic system according to the invention better exploits the thermal energy at disposal, avoiding pointless waste and consequently cutting operating costs.

It must also be noted that the use of two distinct refrigeration circuits operating at different temperatures permits choosing the relative refrigerating fluids in a dedicated way, i.e., a first refrigerating fluid suitable for operating perfectly at the first operating temperature and a second refrigerating fluid suitable for operating perfectly at the second operating temperature, improving still further the efficiency of the system.

## Claims

1. Hydronic system (1), comprising:
- at least a first tank (2), which is suitable for containing water at a first operating temperature and is connected to a first system (3) for heating and/or cooling interiors and/or for producing hot water for sanitary use;
- at least a second tank (9), which is suitable for containing water at a second operating temperature and is connected to a second system (10) for heating and/or cooling interiors;
**characterised by** the fact that it comprises:
- at least a first refrigeration circuit (16) suitable for transferring heat between said first tank (2) and an evaporator element (17);
- at least a second refrigeration circuit (21) suitable for transferring heat between said second tank (9) and said evaporator element (17); and
- at least a service circuit (24, 25, 26) suitable for transferring heat between said evaporator element (17) and at least a heat source (27, 28, 29).

2. Hydronic system (1) according to the claim 1, **characterised by** the fact that said first refrigeration circuit (16) comprises:
- at least a first duct (18) closed on itself in a loop, which extends between said first tank (2) and said evaporator element (17) and contains a first refrigerating fluid, and
- at least a first compressor device (19) which is associated with said first duct (18) and is suitable for the compression of said first refrigerating fluid.

3. Hydronic system (1) according to the claim 2, **characterised by** the fact that said first duct (18) comprises a first coil portion (18a) dipped into said first tank (2) and a first coil section (18b) dipped into said evaporator element (17).

4. Hydronic system (1) according to one or more of the preceding claims, **characterised by** the fact that said second refrigeration circuit (21) comprises:
- at least a second duct (22) closed on itself in a loop, which extends between said second tank (9) and said evaporator element (17) and contains a second refrigerating fluid, and
- at least a second compressor device (23) which is associated with said first duct (18) and is suitable for the compression of said second refrigerating fluid.

5. Hydronic system (1) according to the claim 4, **characterised by** the fact that said second duct (22) comprises a second coil portion (22a) dipped into said second tank (9) and a second coil section (22b) dipped into said evaporator element (17).

6. Hydronic system (1) according to one or more of the preceding claims, **characterised by** the fact that said heat source (27, 28, 29) is a geothermal probe (27).

7. Hydronic system (1) according to one or more of the preceding claims, **characterised by** the fact that said heat source (27, 28, 29) is an air absorber (28).

8. Hydronic system (1) according to one or more of the preceding claims, **characterised by** the fact that said heat source (27, 28, 29) is a thermal solar panel (29).

9. Hydronic system (1) according to one or more of the preceding claims, **characterised by** the fact that it comprises a plurality of said heat sources (27, 28, 29) and an electronic processing and control unit suitable for selecting the most convenient heat source (27, 28, 29) for transferring heat through said first refrigeration circuit (16) and/or said second refrigeration circuit (21).

10. Hydronic system (1) according to one or more of the preceding claims, **characterised by** the fact that said service circuit (24, 25, 26) comprises a first pipe (24) for the thermal connection of said evaporator element (17) to a geothermal probe (27) and a second pipe (25) for the thermal connection of said evaporator element (17) to a thermal solar panel (29).

11. Hydronic system (1) according to the claim 10, **characterised by** the fact that said service circuit (24, 25, 26) comprises a third pipe (26) for the thermal connection of an air absorber (28) to said first pipe (24), between said first pipe (24) and said second pipe (25) being positioned a heat exchanger (30).

12. Hydronic system (1) according to one or more of the preceding claims, **characterised by** the fact that said evaporator element (17) comprises a water container (20), the water contained in said container (20) being placed in fluidic connection with at least a portion of said service circuit (24, 25, 26).

13. Hydronic system (1) according to the claim 12, **characterised by** the fact that said container (20) is placed in fluidic connection with said first pipe (24), the water contained in said container (20) circulating inside said geothermal probe (27).

14. Hydronic system (1) according to one or more of the claims from 10 to 13, **characterised by** the fact that said first pipe (24) comprises a first off-take (32) suitable for connecting directly said geothermal probe (27) to said second tank (9).

15. Hydronic system (1) according to one or more of the claims from 10 to 14, **characterised by** the fact that said second pipe (25) is closed on itself in a loop and comprises a coil element (33) dipped into said evaporator element (17) and a heat absorption section (34) fitted in said thermal solar panel (29).

16. Hydronic system (1) according to one or more of the claims from 10 to 15, **characterised by** the fact that said second pipe (25) comprises a second off-take (36, 37, 38) suitable for connecting directly said thermal solar panel (29) to at least one between said first tank (2) and said second tank (9).

## Patentansprüche

1. Hydroniksystem (1) mit:
- wenigstens einem ersten Behälter (2), welcher zum Aufnehmen von Wasser mit einer ersten Betriebstemperatur geeignet ist und mit einem ersten System (3) zum Heizen und/oder Kühlen von Innenräumen und/oder zum Erzeugen von Heißwasser für den sanitären Gebrauch verbunden ist;
- wenigstens einem zweiten Behälter (9), welcher zum Aufnehmen von Wasser mit einer zweiten Betriebstemperatur geeignet ist und mit einem zweiten System (10) zum Heizen und/oder Kühlen von Innenräumen verbunden ist;
**dadurch gekennzeichnet, dass** dieses umfasst:
- wenigstens einen erste Kühlkreislauf (16), der zum Übertragen von Wärme zwischen dem ersten Behälter (2) und einem Verdunsterelement (17) geeignet ist;
- wenigstens einen zweiten Kühlkreislaut (21), der zum Übertragen von Wärme zwischen dem zweiten Behälter (9) und dem Verdunsterelement (17) geeignet ist; und
- wenigstens einen Dienstkreislauf (24, 25, 26), der zum Übertragen von Wärme zwischen dem Verdunsterelement (17) und wenigstens einer Wärmequelle (27, 28, 29) geeignet ist.

2. Hydroniksystem (1) nach Anspruch 1, **dadurch gekennzeichnet, dass** der erste Kühlkreislauf (16) umfasst:
- wenigstens einen ersten Kanal (18), der in sich in einer Schleife geschlossen ist, welcher sich zwischen dem ersten Behälter (2) und dem Verdunsterelement (17) erstreckt und ein erstes Kühlfluid enthält, und
- wenigstens eine erste Kompressoreinrichtung (19), welche mit dem ersten Kanal (18) verbunden ist und für die Kompression des ersten Kühlfluids geeignet ist.

3. Hydroniksystem (1) nach Anspruch 2, **dadurch gekennzeichnet, dass** der erste Kanal (18) aufweist einen ersten Wicklungsbereich (18a), der in den ersten Behälter (2) eingetaucht ist, und einen ersten Wicklungsabschitt (18b), der in das Verdunsterelement (17) eingetaucht ist.

4. Hydroniksystem (1) nach ein oder mehreren der vorhergehenden Ansprüche, **dadurch gekennzeichnet, dass** der zweite Kühlkreislauf (21) umfasst:
- wenigstens einen zweiten Kanal (22), der in sich in einer Schleife geschlossen ist, welcher sich zwischen dem zweiten Behälter (9) und dem Verdunsterelement (17) erstreckt und ein zweites Kühlfluid enthält, und
- eine zweite Kompressoreinrichtung (23), welche mit dem ersten Kanal (18) verbunden ist und für die Kompression des zweiten Kühlfluids geeignet ist.

5. Hydroniksystem (1) nach Anspruch 4, **dadurch gekennzeichnet, dass** der zweite Kanal (22) aufweist einen zweiten Wicklungsbereich (22a) der in den zweiten Behälter (9) eingetaucht ist, und einen zweiten Wicklungsabschnitt (22b), der in das Verdunsterelement (17) eingetaucht ist.

6. Hydroniksystem (1) nach ein oder mehreren der vorhergehenden Ansprüche, **dadurch gekennzeichnet, dass** die Wärmequelle (27, 28, 29) eine geothermische Sonde (27) ist.

7. Hydroniksystem (1) nach ein oder mehreren der vorhergehenden Ansprüche, **dadurch gekennzeichnet, dass** die Wärmequelle (27, 28, 29) ein Luftabsorber (28) ist.

8. Hydroniksystem (1) nach ein oder mehreren der vorhergehenden Ansprüche, **dadurch gekennzeichnet, dass** die Wärmequelle (27, 28, 29) ein thermisches Solarmodul (29) ist.

9. Hydroniksystem (1) nach ein oder mehreren der vorhergehenden Ansprüche, **dadurch gekennzeichnet, dass** dieses eine Mehrzahl von Wärmequellen (27, 28, 29) und eine elektronische Verarbeitungs- und Steuereinheit umfasst, die zum Auswählen der günstigsten Wärmequelle (27, 28, 29) zum Übertragen von Wärme durch den ersten Kühlkreislauf (16) und/oder den zweiten Kühlkreislauf (21) hindurch geeignet ist.

10. Hydroniksystem (1) nach ein oder mehreren der vorhergehenden Ansprüche, **dadurch gekennzeichnet, dass** der Dienstkreislauf (24, 25, 26) ein erstes Rohr (24) für die thermische Verbindung des Verdunsterelements (17) mit der geothermischen Sonde (27) und ein zweites Rohr (25) für die thermische Verbindung des Verdunsters (17) mit einem thermischen Solarmodul (29) umfasst.

11. Hydroniksystem (1) nach Anspruch 10, **dadurch gekennzeichnet, dass** der Dienstkreislauf (24, 25, 26) ein drittes Rohr (26) für die thermische Verbindung eines Luftabsorbers (28) mit dem ersten Rohr (24) umfasst, wobei zwischen dem ersten Rohr (24) und dem zweiten Rohr (25) ein Wärmetauscher (30) positioniert ist.

12. Hydroniksystem (1) nach ein oder mehreren der vorhergehenden Ansprüche, **dadurch gekennzeichnet, dass** das Verdunsterelement (17) einen Wasserbehälter (20) umfasst, wobei dass in dem Behälter (20) enthaltene Wasser in eine Fluidverbindung mit wenigstens einem Bereich des Dienstkreislaufs (24, 25, 26) gebracht wird.

13. Hydroniksystem (1) nach Anspruch 12, **dadurch gekennzeichnet, dass** der Behälter (20) in eine Fluidverbindung mit dem ersten Rohr (24) gebracht wird, wobei das in dem Behälter (20) enthaltene Wasser innerhalb der geothermischen Sonde (27) zirkuliert.

14. Hydroniksystem (1) nach ein oder mehreren der Ansprüche 10 bis 13, **dadurch gekennzeichnet, dass** das erste Rohr (24) einen ersten Ausgangsanschluss (32) umfasst, der zum direkten Verbinden der geothermischen Sonde (27) mit dem zweiten Behälter (9) geeignet ist.

15. Hydroniksystem (1) nach ein oder mehreren der Ansprüche 10 bis 14, **dadurch gekennzeichnet, dass** das zweite Rohr (25) in sich in einer Schleife geschlossen ist und aufweist ein Wicklungselement (32), das in das Verdunsterelement (17) eingetaucht ist, und einen Wärmeabsorptionsabschnitt (34), der in dem thermischen Solarmodul (29) sitzt.

16. Hydroniksystem (1) nach ein oder mehreren der Ansprüche 10 bis 15, **dadurch gekennzeichnet, dass** das zweite Rohr (25) einen zweiten Ausgangsanschluss (36, 37, 38) umfasst, der für ein direktes Verbinden des thermischen Solarmoduls (29) mit wenigstens einem von dem ersten Behälter (2) und dem zweiten Behälter (9) geeignet ist.

## Revendications

1. Système hydronique (1) comprenant :
- au moins un premier réservoir (2), qui est apte à contenir de l'eau à une première température de fonctionnement et est relié à un premier système (3) pour le chauffage et/ou le rafraîchissement d'intérieurs et/ou pour la production d'eau chaude à usage sanitaire ;
- au moins un second réservoir (9), qui est apte à contenir de l'eau à une seconde température de fonctionnement et est relié à un second système (10) pour le chauffage et/ou le rafraîchissement d'intérieurs ;
**caractérisé en ce qu'**il comprend :
- au moins un premier circuit frigorifique (16) apte à transférer de la chaleur entre ledit premier réservoir (2) et un élément évaporateur (17) ;
- au moins un second circuit frigorifique (21) apte à transférer de la chaleur entre ledit second réservoir (9) et ledit élément évaporateur (17) ; et
- au moins un circuit de service (24, 25, 26) apte à transférer de la chaleur entre ledit élément évaporateur (17) et au moins une source de chaleur (27, 28, 29).

2. Système hydronique (1) selon la revendication 1, **caractérisé en ce que** ledit premier circuit frigorifique (16) comprend :
- au moins un premier conduit (18) fermé sur lui-même en une boucle, qui s'étend entre ledit premier réservoir (2) et ledit élément évaporateur (17) et contient un premier fluide réfrigérant, et
- au moins un premier dispositif compresseur (19) qui est associé audit premier conduit (18) et est apte à assurer la compression dudit premier fluide réfrigérant.

3. Système hydronique (1) selon la revendication 2, **caractérisé en ce que** ledit premier conduit (18) comprend une première portion en serpentin (18a) immergée dans ledit premier réservoir (2) et un premier tronçon en serpentin (18b) immergé dans ledit élément évaporateur (17).

4. Système hydronique (1) selon l'une ou plusieurs des revendications précédentes, **caractérisé en ce que** ledit second circuit frigorifique (21) comprend :
- au moins un second conduit (22) fermé sur lui-même en une boucle, qui s'étend entre ledit second réservoir (9) et ledit élément évaporateur (17) et contient un second fluide réfrigérant, et
- au moins un second dispositif compresseur (23) qui est associé audit premier conduit (18) et est apte à assurer la compression dudit second fluide réfrigérant.

5. Système hydronique (1) selon la revendication 4, **caractérisé en ce que** ledit second conduit (22) comprend une seconde portion en serpentin (22a) immergée dans ledit second réservoir (9) et un second tronçon en serpentin (22b) immergé dans ledit élément évaporateur (17).

6. Système hydronique (1) selon l'une ou plusieurs des revendications précédentes, **caractérisé en ce que** ladite source de chaleur (27, 28, 29) est une sonde géothermique (27).

7. Système hydronique (1) selon l'une ou plusieurs des revendications précédentes, **caractérisé en ce que** ladite source de chaleur (27, 28, 29) est un absorbeur d'air (28).

8. Système hydronique (1) selon l'une ou plusieurs des revendications précédentes, **caractérisé en ce que** ladite source de chaleur (27, 28, 29) est un panneau solaire thermique (29).

9. Système hydronique (1) selon l'une ou plusieurs des revendications précédentes, **caractérisé en ce qu'**il comprend une pluralité desdites sources de chaleur (27, 28, 29) et une unité de traitement et de commande électronique apte à sélectionner la source de chaleur (27, 28, 29) la plus convenable pour transférer de la chaleur à travers ledit premier circuit frigorifique (16) et/ou ledit second circuit frigorifique (21).

10. Système hydronique (1) selon l'une ou plusieurs des revendications précédentes, **caractérisé en ce que** ledit circuit de service (24, 25, 26) comprend une première conduite (24) pour la liaison thermique dudit élément évaporateur (17) avec une sonde géothermique (27) et une seconde conduite (25) pour la liaison thermique dudit élément évaporateur (17) avec un panneau solaire thermique (29).

11. Système hydronique (1) selon la revendication 10, **caractérisé en ce que** ledit circuit de service (24, 25, 26) comprend une troisième conduite (26) pour la liaison thermique d'un absorbeur d'air (28) avec ladite première conduite (24), entre ladite première conduite (24) et ladite seconde conduite (25) étant positionné un échangeur thermique (30).

12. Système hydronique (1) selon l'une ou plusieurs des revendications précédentes, **caractérisé en ce que** ledit élément évaporateur (17) comprend un conteneur d'eau (20), l'eau contenue dans ledit conteneur (20) étant mise en liaison fluidique avec au moins une portion dudit circuit de service (24, 25, 26).

13. Système hydronique (1) selon la revendication 12, **caractérisé en ce que** ledit conteneur (20) est mis en liaison fluidique avec ladite première conduite (24), l'eau contenue dans ledit conteneur (20) circulant dans ladite sonde géothermique (27).

14. Système hydronique (1) selon l'une ou plusieurs des revendications de 10 à 13, **caractérisé en ce que** ladite première conduite (24) comprend une première prise directe (32) apte à relier directement ladite sonde géothermique (27) audit second réservoir (9).

15. Système hydronique (1) selon l'une ou plusieurs des revendications de 10 à 14, **caractérisé en ce que** ladite seconde conduite (25) est fermée sur elle-même en une boucle et comprend un élément de serpentin (33) immergé dans ledit élément évaporateur (17) et un tronçon d'absorption de chaleur (34) monté dans ledit panneau solaire thermique (29).

16. Système hydronique (1) selon l'une ou plusieurs des revendications de 10 à 15, **caractérisé en ce que** ladite seconde conduite (25) comprend une seconde prise directe (36, 37, 38) apte à relier directement ledit panneau solaire thermique (29) à au moins un parmi ledit premier réservoir (2) et ledit second réservoir (9).
